Europäisches Patentamt

European Patent Office

Office européen des brevets

(19)

(11) **EP 0 674 436 B1**

(12) **EUROPÄISCHE PATENTSCHRIFT**

(45) Veröffentlichungstag und Bekanntmachung des Hinweises auf die Patenterteilung:
**08.09.1999 Patentblatt 1999/36**

(51) Int Cl.⁶: **H04N 5/455**

(21) Anmeldenummer: **95200650.0**

(22) Anmeldetag: **17.03.1995**

(54) **Schaltungsanordnung zum Demodulieren eines Videosignals**

Circuit arrangement for the demodulation of video signals

Montage de circuit pour la démodulation de signaux vidéo

(84) Benannte Vertragsstaaten:
**DE FR GB IT**

(30) Priorität: **23.03.1994 DE 4409981**
**11.04.1994 DE 4412910**

(43) Veröffentlichungstag der Anmeldung:
**27.09.1995 Patentblatt 1995/39**

(73) Patentinhaber:
• **Philips Patentverwaltung GmbH**
**22335 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB IT**

(72) Erfinder:
• **Brilka, Joachim**
**D-22335 Hamburg (DE)**

• **Hafemeister, Thomas**
**D-22335 Hamburg (DE)**
• **Weltersbach, Wolfgang**
**D-22335 Hamburg (DE)**

(74) Vertreter: **Peters, Carl Heinrich, Dipl.-Ing.**
**Philips Patentverwaltung GmbH,**
**Röntgenstrasse 24**
**22335 Hamburg (DE)**

(56) Entgegenhaltungen:
EP-A- 0 478 821          EP-A- 0 512 624
US-A- 4 796 102

• **IEEE TRANSACTIONS ON CONSUMER ELECTRONICS, Bd. 37, Nr. 4, 30.November 1991, NEW YORK US, Seiten 783-792, XP000275989 BRILKA J. ET AL: "AN ADVANCED 5V VIF-/SIF PLL FOR SIGNAL DETECTION IN TV SETS AND VTRS"**

## Beschreibung

Die Erfindung bezieht auf eine Schaltungsanordnung zum Demodulieren eines auf eine zwischenfrequente Trägerschwingung frequenzmodulierten Videosignals (ZF-Signal) mit

- einer als Frequenz- bzw. Phasendemodulator ausgebildeten ersten Demodulationsstufe zum multiplikativen Verknüpfen des ZF-Signals mit einer Trägerschwingung von einem steuerbaren Oszillator und zur Abgabe eines aus dieser Verknüpfung gebildeten ersten Ausgangssignals,
- einer als Frequenz- bzw. Phasendemodulator ausgebildeten zweiten Demodulationsstufe zum multiplikativen Verknüpfen des ZF-Signals mit der Trägerschwingung um eine Viertelperiode der zwischenfrequenten Trägerschwingung phasenverschoben und zur Abgabe eines aus dieser Verknüpfung gebildeten zweiten Ausgangssignals,
- einer ersten Filterstufe zum Tiefpaßfiltern des ersten Ausgangssignals und zum Abgeben eines dritten Ausgangssignals,
- einer Multiplikationsstufe zum multiplikativen Verknüpfen des zweiten und des dritten Ausgangssignals zu einem vierten Ausgangssignal,
- einer Überlagerungsstufe zum Bilden eines siebten Ausgangssignals durch additives Verknüpfen von aus dem zweiten und dem vierten Ausgangssignal abgeleiteten fünften bzw. sechsten Ausgangssignalen und
- einer zweiten Filterstufe zum Gewinnen eines Steuersignals aus dem siebten Ausgangssignal zum Steuern der Frequenz und/oder Phase des steuerbaren Oszillators.

Aus dem Aufsatz "An Advanced 5V Vif-/SiF PLL for Signal Detection in TV Sets and VTRs", erschienen in IEEE Trans. Cons. 1991, Band 37, No. 4, ist ein Video-Demodulator mit einer sogenannten FPLL bekannt. Dieser umfaßt einen Oszillator (VCO), von dem über einen Frequenzteiler mit dem Teilerfaktor 2 zwei um 90° gegeneinander phasenverschobene Schwingungen einem Quadraturdetektor bzw. einem Inphase-Detektor zugeführt werden. Diesen Detektoren wird außerdem ein Video-Zwischenfrequenzsignal zugeleitet. Vom Quadraturdetektor gelangt ein Ausgangssignal über einen Stromkonverter und ein Schleifenfilter als Steuergröße an den Oszillator zurück. Der Oszillator, der Quadraturdetektor und das Schleifenfilter bilden eine phasenverriegelte Schleife. Um die Einfangzeit dieser phasenverriegelten Schleife beim Sendersuchbetrieb zu verringern, enthält die bekannte Anordnung weiterhin eine sogenannte FLL, die außer dem Inphase-Detektor einen Tiefpaß und einen Multiplizierer enthält. Dem Multiplizierer wird ein Ausgangssignal des Inphase-Detektors über den Tiefpaß zugeführt, ein zweites Eingangssignal des Multiplizierers wird vom Ausgangssignal des Quadraturdetektors gebildet. Ein Ausgangssignal des Multiplizierers wird dem dem Schleifenfilter vom Quadraturdetektor her zugeführten Strom überlagert.

Bei dieser Schaltungsanordnung erzeugt die FLL einen Strom, der von der Frequenzdifferenz im Einfangmodus abhängig und zu der Phasendifferenz im verriegelten Modus proportional ist. Dagegen liefert die phasenverriegelte Schleife einen geringen Gleichstrom während des Einfangmodus und ihren hauptsächlichen Strom im verriegelten Modus zum Steuern der Phase. Bei der vorstehend beschriebenen Schaltungsanordnung werden die Ströme der FLL und der phasenverriegelten Schleife addiert, dem Schleifenfilter zugeleitet und anschließend als Steuersignal an den Oszillator geführt. Durch einen weiten Einfangbereich der FLL wird die Einfangzeit reduziert.

Aus der DE-PS 40 21 912 ist eine Zwischenfrequenzvideosignal-Verarbeitungsschaltung mit einem Phasenregelkreis bekannt. Diese Schaltung umfaßt einen gleichlaufenden Demodulator, dem einerseits ein Zwischenfrequenzvideosignal (ZFV-Signal) und andererseits ein Ausgangssignal eines spannungsgesteuerten Oszillators zugeführt werden und der ein Videodemodulationsausgangssignal abgibt. Der Phasenregelkreis besteht neben dem spannungsgesteuerten Oszillator aus einem Phasenregler, der die Phase des Ausgangssignals des Oszillators um 90° voreilen läßt, einem Phasendetektor, der einen Phasenvergleich zwischen dem Ausgangssignal des Phasenreglers und dem ZFV-Signal durchführt, und einem Tiefpaßfilter, das das Ausgangssignal des Phasendetektors filtert und dem Steuereingang des spannungsgesteuerten Oszillators zuführt. Bei eingerastetem Betrieb des Phasenregelkreises wird das Ausgangssignal des spannungsgesteuerten Oszillators in Frequenz und Phase der normalen Videoträgerfrequenz des ZFV-Signals gleich gemacht und dem gleichlaufenden Demodulator zugeführt. Dieser demoduliert das ZFV-Signal synchron auf der Basis dieses Signals unter Bildung des Videodemodulationsausgangssignals.

Die Betriebsart des Phasendetektors wird bei der aus der DE-PS 40 21 912 bekannten Schaltungsanordnung neben der Auswertung des ZFV-Signalpegels zusätzlich auch auf der Basis des Video-Demodulationsausgangssignals zwischen einem PLL-Betrieb und einem Haltebetrieb umgeschaltet. Dazu enthält der Phasendetektor mindestens zwei Erweiterungseingänge, wobei einem ersten Eingang ein aus der Stärke des ZFV-Signals abgeleitetes Signalstärkedetektiersignal zugeführt wird, an einem zweiten Eingang ein aus dem Videodemodulationsausgangssignal abgeleitetes Modulationsgraddetektiersignal angelegt ist und dem Phasendetektor außerdem das Videodemodulationsausgangssignal zugeleitet wird.
Im PLL-Betrieb führt der Phasendetektor einen Phasenvergleich des ZFV-Signals und des Ausgangssignals des Phasenreglers durch und liefert ein Phasendetektiersignal. Im Haltebetrieb hält und liefert der Phasendetektor das im letzten PLL-Betrieb ausgegebene Phasendetektiersignal. Der Phasendetektor verwendet dazu einen Kondensator, der im Tiefpaßfilter vorgesehen ist. Dazu wird bei dieser bekannten Schaltungsanordnung während der Austastperioden des Videosignals der PLL-Betrieb eingeschaltet, während dessen der Phasendetektor durch das Videodemodulationsausgangssignal wirksam geschaltet ist. In diesem Zustand ist das Tiefpaßfilter auf eine kleine Zeitkonstante geschaltet, die schnelle Umladungen des erwähnten Kondensators erlauben. Während des Bildinhalts des Videodemodulationsausgangssignals werden der Phasendetektor und das Tiefpaßfilter jedoch in den Haltebetrieb geschaltet, in dem der Phasendetektor unwirksam geschaltet ist und das Tiefpaßfilter auf eine große Zeitkonstante umgeschaltet wird. In diesem Zustand des Tiefpaßfilters kann sich der erwähnte Kondensator allenfalls sehr langsam umladen, der einmal auf ihm gespeicherte Spannungswert wird daher gehalten.

Auch aus dem Vortrag Nr. 23 von O. Hermsdörfer, "Der Synchrongleichrichter im Nyquistmeßdemodulator - Aufbereitung des Schaltträgers und Auswirkungen von Phasenstörhub auf das demodulierte Signal - ", gehalten auf der FKTG-Tagung vom 04. bis zum 07.10.1976, ist es bekannt, zur Erzeugung eines Schaltträgers für die Demodulation eines Bild-ZF-Signals in einem Inphase-Demodulator eine phasenverriegelte Schleife zu verwenden. Darin wird ein Signal von einem Oszillator (VCO) in einem Phasendiskriminator mit einem Signal verglichen, welches aus dem Bild-ZF-Signal über ein Bandfilter und einen Begrenzer erhalten wird, um eine Steuerspannung für den Oszillator zu erhalten. Dabei kann durch Unsymmetrien im Seitenbandspektrum des Bild-ZF-Signals bei der Begrenzung eine Amplitudenmodulation des Bildträgers in unerwünschte Phasenmodulation umgewandelt und im Phasendiskriminator der phasenverriegelte Schleife gleichgerichtet werden. Dies kann zu einer Phasenmodulation des Oszillators und damit zu Störungen im Videoausgangssignal führen, welches im Inphase-Demodulator mit dem Schaltträger vom Oszillator demoduliert wird. Um dieses zu vermeiden, wertet man die vom Phasendiskriminator abgegebene Spannung über eine Abtast- und Halteschaltung nur in den Zeitpunkten aus, in denen keine Bildmodulation vorhanden ist, z.B. zur Zeit der hinteren Schwarzschulter, und erreicht damit eine nahezu vollkommene Unabhängigkeit vom Bildinhalt.

In Schaltungsanordnungen für den Empfang und die Verarbeitung von Videosignalen unterschiedlicher Übertragungsnormen, die eine Synchrondemodulation der in den vorstehend beschriebenen Schaltungen benutzten Art verwenden, treten bei dem in Frankreich benutzten Übertragungsverfahren "Secam-L" Störungen in den den demodulierten Synchronsignalen bei Übermodulation der Fernsehsender auf. Die Ursache dafür liegt in der bei "Secam-L" genutzten positiven Modulation mit einem Restträger für die Synchronsignale.

Es hat sich im Betrieb gezeigt, daß bei der Demodulation mit den bekannten Schaltungsanordnungen sogar eine invertierte Phasenlage des demodulierten Signals auftreten kann. In jedem Fall ergeben sich jedoch bei Demodulationsanordnungen mit einer Trägeraufbereitung mit phasenverriegelten Schleifen starke Verzerrungen insbesondere der Vertikal-Synchronimpulse. Derartige Störungen führen dazu, daß die an die Qualität der aufbereiteten Videosignale und/oder Synchronsignale zu stellenden Anforderungen im Betrieb von den bekannten Schaltungsanordnungen nicht mehr eingehalten werden.

Die Erfindung hat die Aufgabe, eine Schaltungsanordnung zum Demodulieren eines Videosignals zu schaffen, die auch bei Übermodulation gemäß dem "Secam-L"-Verfahren störungsfrei demodulierte Signale, insbesondere Synchronsignale, liefert.

Diese Aufgabe wird bei einer Schaltungsanordnung der gattungsgemäßen Art erfindungsgemäß gelöst durch

- ein erstes Koeffizientenglied zum Ableiten des fünften Ausgangssignals aus dem zweiten Ausgangssignal und
- ein zweites Koeffizientenglied zum Ableiten des sechsten Ausgangssignals aus dem vierten Ausgangssignal,
- wobei in jedem Koeffizientenglied zum Bilden des von ihm abgeleiteten Signals das ihm zugeführte Signal mit einem vorgebbaren Koeffizienten multipliziert wird und der Koeffizient des ersten Koeffizientengliedes größer als der des zweiten Koeffizientengliedes gewählt ist.

Die Kennlinie eines Frequenz- bzw. Phasendemodulators, in dem das zu demodulierende Signal mit einer Trägerschwingung multiplikativ verknüpft wird, d.h. der Wert des Ausgangssignals des Frequenz- bzw. Phasendemodulators als Funktion des Phasenwinkels zwischen den beiden zugeführten Signalen, weist einen kosinusförmigen Verlauf auf. Diese Kennlinie hat somit bei einem Phasenwinkel von 90° die gleiche Steilheit wie bei einem Phasenwinkel von -90°, allerdings bei entgegengesetztem Vorzeichen. Das Ausgangssignal des Frequenz- bzw. Phasendemodulators und damit ein daraus zur Nachsteuerung eines steuerbaren Oszillators ableitbares Steuersignal ist somit für den korrekten Phasenwinkel von 90° zwischen den dem Frequenzbzw. Phasendemodulator zugeführten Signalen genauso groß und vorzeichenrichtig wie für die invertierte Phasenlage bei einem Phasenwinkel von -90°, wie sie bei übermodulierten Trägerschwingungen mit einem Phasensprung von 180° in negativer Richtung auftritt. Dadurch wird eine phasenverriegelte Schleife mit einem derartigen Frequenz- bzw. Phasendemodulator mit gleicher Schleifenverstärkung bzw. Steilheit der Steuerung des Oszillators sowohl der erwünschten Phasenlage der Trägerschwingung (Phasenwinkel 90°) wie auch der unerwünschten Phasenfolge bei Übermodulation (Phasenwinkel -90°) folgen.

Dagegen wird bei der Schaltungsanordnung nach der Erfindung eine veränderte Kennlinie erzeugt, die durch Linearkombination der beschriebenen Kennlinie gemäß der Kosinusfunktion mit einem Kennlinienanteil gebildet wird, der dem Produkt aus dem Sinus und dem Kosinus des Phasenwinkels folgt. Dabei sind die Koeffizienten dieser Linearkombination derart gewählt, daß im Kennlinienbereich für die invertierte Phase ein sehr flacher Kennlinienverlauf mit gegenüber der korrekten Phasenlage invertierter Steilheit gebildet wird. Dadurch wird verhindert, daß bei der invertierten Phasenlage (-90°) ein zusätzlicher, unerwünschter, stabiler Kennlinienbereich entsteht, der zu einem fehlerhaften Einrasten der Phasenregelschleife führen würde.

Mit dieser erfindungsgemäßen Schaltungsanordnung wird eine sehr starke Verringerung der Phasenverzerrungen durch die Übermodulation - insbesondere im Bereich der Synchronimpulse - erzielt. Selbst die sehr kurzen Ausgleichsimpulse im Vertikalsynchronsignal werden wenigstens nahezu unverzerrt demoduliert. Die erfindungsgemäße Schaltung ist dabei sehr einfach aufgebaut und abgleichfrei auch in integrierter Schaltungstechnik herstellbar. Eine Verwendung für den sogenannten Mehrnormenbetrieb ist ohne Schwierigkeiten möglich.

In einer bevorzugten Weiterbildung umfaßt die erfindungsgemäße Schaltungsanordnung eine Tastschaltung, die in den Signalweg des siebten Ausgangssignals zwischen der Überlagerungsstufe und der zweiten Filterstufe eingefügt ist zum Umsteuern dieses Signalweges der Art, daß er während des Auftretens von Synchronimpulsen im Videosignal einen niedrigeren Übertragungsfaktor annimmt als in den Zeitintervallen außerhalb der Synchronimpulse.

Insbesondere kann dabei die Tastschaltung als Abtast- und Halteschaltung ausgebildet sein, von der das Umsteuern als Unterbrechung des Signalweges des siebten Ausgangssignals während des Auftretens von Synchronimpulsen im Videosignal und zum Konstanthalten des Wertes des Steuersignals während dieser Synchronimpulse ausführbar ist.

Durch diese Abtast- und Halteschaltung wird erreicht, daß die Anteile des Videosignals, in denen bevorzugt eine Übermodulation auftritt, zur Bildung des Steuersignals für den steuerbaren Oszillator nicht mehr herangezogen werden. Damit können gegebenenfalls noch auftretende restliche Störungen beseitigt werden. Das Konstanthalten des Wertes des Steuersignals während der Synchronimpulse kann vorteilhaft durch einen in der zweiten Filterstufe enthaltenen Kondensator erfolgen.

In einigen Anwendungsfällen hat sich jedoch gezeigt, daß das Umsteuern des Signalweges des siebten Ausgangssignals auf einen niedrigeren Übertragungsfaktor zu einer noch sichereren Unterdrückung restlicher Störungen führt als die vollständige Unterbrechung des Signalweges während des Auftretens von Synchronimpulsen. Das Umsteuern kann bevorzugt durch Umschalten des Signalweges auf eine höhere Dämpfung für das siebte Ausgangssignal bzw. eine geringere Verstärkung für das siebte Ausgangssignal während der Synchronimpulse erfolgen. Es findet dann eine verminderte Nachführung des steuerbaren Oszillators statt. Vorzugsweise kann das siebte Ausgangssignal während des Auftretens der Synchronimpulse auf etwa 25 bis 30 % in seiner Übertragung abgeschwächt werden. Diese Ausführungsform ist vorteilhaft besonders bei der Verarbeitung von Videosignalen nach der sogenannten L-Norm bei nicht normgerechten Amplituden des Bildinhalts im Videosignal oder bei bestimmten Eigenschaften der das auf die Trägerschwingung modulierte Videosignal liefernden Hochfrequenz-Empfangsschaltung.

Nach einer anderen, vorteilhaften Ausgestaltung weist die erfindungsgemäße Schaltungsanordnung eine Phasenschieberstufe auf, über die entweder das ZF-Signal der zweiten Demodulationsstufe zuleitbar ist und durch die es bezüglich der Frequenz der Trägerschwingung um 90° phasenverschoben wird, oder über die die Trägerschwingung vom Oszillator zu einer der Demodulationsstufen zuleitbar ist und durch die die Trägerschwingung vom Oszillator um 90° phasenverschoben wird. In einer Abwandlung davon kann der steuerbare Oszillator einen ersten und einen zweiten Ausgang aufweisen zum Abgeben einer ersten Trägerschwingung bzw. einer ihr gegenüber um 90° phasenverschobenen zweiten Trägerschwingung. In allen Fällen wird erreicht, daß die Phasendifferenzen der in der ersten und der zweiten Demodulationsstufe verknüpften Signale um 90° voneinander abweichen.

Vorteilhaft wird ferner eine Begrenzerstufe zum Begrenzen der Amplitude des ZF-Signals vorgesehen, welches der ersten und der zweiten Demodulationsstufe zugeleitet wird. Dadurch werden Störeinflüsse durch eine Amplitudenmodulation des ZF-Signals unterbunden.

Nach einer anderen Ausgestaltung umfaßt die erfindungsgemäße Schaltungsanordnung eine dritte Demodulationsstufe, der an einem ersten Eingang das ZF-Signal und an einem zweiten Eingang die Trägerschwingung bzw. eine der Trägerschwingungen vom Oszillator zuführbar ist und von der an einem Ausgang ein demoduliertes Videosignal abgebbar ist, sowie eine Synchronimpuls-Abtrennstufe zum Gewinnen von Synchronimpulsen aus dem demodulierten Videosignal, die der Tastschaltung zum Umsteuern des Übertragungsfaktors des Signalweges des siebten Ausgangssignals zuführbar sind.

In der dritten Demodulationsstufe wird das demodulierte Videosignal nicht nur für die Gewinnung von Synchronimpulsen, sondern auch für die weitere Signalverarbeitung und beispielsweise Wiedergabe aufbereitet, wenn die erfindungsgemäße Schaltungsanordnung in einem entsprechenden Gerät eingesetzt wird. Außerdem ist die Abtrennung von Synchronimpulsen am einfachsten im demodulierten Videosignal durchführbar.

Die Synchronimpuls-Abtrennstufe umfaßt dazu vorteilhaft eine Schwarzwertdetektionsstufe, durch die ein einem schwarzen Bildinhalt entsprechender Signalpegel im demodulierten Videosignal ermittelbar ist, der als Bezugspegel zum Abtrennen der Synchronimpulse heranziehbar ist. Eine derartige Schwarzwertdetektionsstufe mit sehr einfachem und betriebssicherem Aufbau ist insbesondere der DE-OS 40 40 298 zu entnehmen, auf deren diesbezügliche Offenbarung hiermit ausdrücklich Bezug genommen wird.

Durch das Einfügen der Tastschaltung in den Signalweg für das siebte Ausgangssignal und die damit vorgenommene Umsteuerung des Übertragungsfaktors dieses Signalweges während der Synchronimpulse wird nicht nur eine weitere Verringerung der Störungen durch Übermodulationen im Bereich der Synchronimpulse erreicht, sondern auch eine Verringerung des Einflusses fertigungsbedingter Toleranzen der Bauelemente der beschriebenen Schaltungsanordnung auf deren Funktion, insbesondere auf den Regelfehler der phasenverriegelten Schleife.

Nach einer weiteren Ausgestaltung ist das Umsteuern des Übertragungsfaktors des Signalweges des siebten Ausgangssignals in der Tastschaltung wahlweise mit allen Synchronimpulsen oder nur mit Vertikal-Synchronimpulsen aus dem demodulierten Videosignal steuerbar. Dazu kann vorzugsweise die Synchronimpuls-Abtrennstufe auf das Abtrennen wahlweise aller Synchronimpulse oder der Vertikal-Synchronimpulse umschaltbar ausgeführt sein. Bevorzugt können auch die Vertikal-Synchronimpulse durch eine Integrationsstufe gewonnen werden, was bei stark gestörten ZF-Sinalen mit einem hohen Anteil an Rauschsignalen und Störimpulsen die Gewinnung eines stabilen Tastimpulses zum Steuern der Tastschaltung ermöglicht. In solchen Fällen wird eine Umsteuerung des Übertragungsfaktors des Signalweges des siebten Ausgangssignals durch die Tastschaltung während der Horizontal-Synchronimpulse entfallen und nur noch während der besonders hohe Störungen hervorrufenden Vertikal-Synchronimpulse vorgenommen.

Nach einer anderen Fortbildung wird das Umsteuern des Signalweges des siebten Ausgangssignals auf einen niedrigen Übertragungsfaktor abhängig von der Übertragungsnorm des Videosignals vorgenommen. Diese Maßnahme dient der Anpassung an einen Mehrnormenempfang, d.h. für den Einsatz der Schaltungsanordnung zum Empfang von Videosignalen, die nach unterschiedlichen Übertragungsnormen ausgesendet werden. Die beschriebene Umsteuerung bzw. Unterbrechung mit der Tastschaltung kann dann bei bestimmten Übertragungsnormen durchgeführt werden, bei anderen dagegen wird sie nicht wirksam. Vorzugsweise wird das Umsteuern bei Übertragungsnormen mit sogenannter negativer Modulation des Videosignals auf die Trägerschwingung unwirksam geschaltet.

Ausführungsbeispiele der Erfindung sind in der Zeichnung dargestellt und werden im folgenden näher beschrieben. Es zeigen:

Fig. 1    das Blockschaltbild eines ersten Ausführungsbeispiels,

Fig. 2    die Kennlinie der Schaltungsanordnung nach Fig. 1 für die Abhängigkeit des darin erzeugten siebten Ausgangssignals vom Phasenwinkel zwischen dem ZF-Signal und der Trägerschwingung vom steuerbaren Oszillator und

Fig. 3    das Blockschaltbild eines zweiten Ausführungsbeispiels.

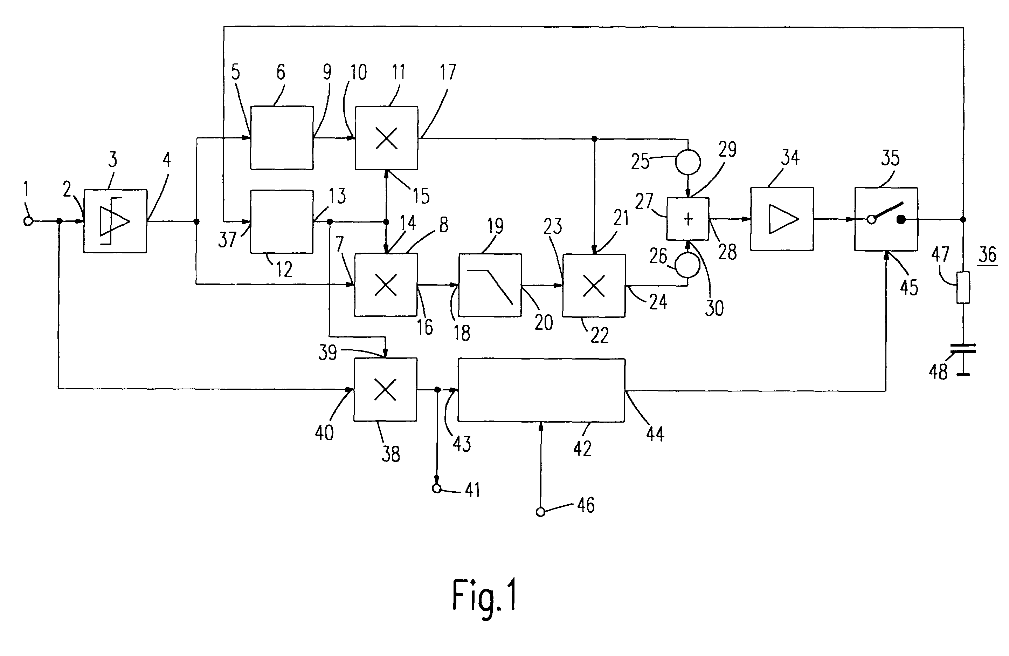

Der Schaltungsanordnung in Fig. 1 wird über einen Anschluß 1 ein ZF-Signal einem Eingang 2 einer Begrenzerstufe 3 zugeführt. In der Begrenzerstufe 3 wird das ZF-Signal, d.h. das auf eine zwischenfrequente Trägerschwingung frequenzmodulierte Videosignal, in seiner Amplitude auf einen konstanten Wert begrenzt und dazu gegebenenfalls auch verstärkt. Bevorzugt kann die Begrenzerstufe 3 in der Weise aufgebaut sein, wie sie in der DE-OS 43 11 943.3 beschrieben ist. Von der Begrenzerstufe 3 wird an ihrem Ausgang 4 ein von unerwünschten Amplitudenmodulationen befreites ZF-Signal abgegeben. Es gelangt einerseits an einen Eingang 5 einer Phasenschieberstufe 6, andererseits an einen ersten Eingang 7 einer ersten Demodulationsstufe 8.

Von der Phasenschieberstufe 6 wird an ihrem Ausgang 9 ein ZF-Signal abgegeben, das gegenüber dem ZF-Signal am Eingang 5 um 90° bezüglich seiner Trägerschwingung verzögert ist. Dieses verzögerte ZF-Signal wird einem ersten Eingang 10 einer zweiten Demodulationsstufe 11 zugeführt.

Von einem steuerbaren Oszillator 12 wird an einem Ausgang 13 eine Trägerschwingung abgegeben und je einem zweiten Eingang 14 bzw. 15 der ersten bzw. zweiten Demodulationsstufe 8 bzw. 11 zugeleitet. Auf diese Weise ist der Phasenwinkel zwischen den Trägerschwingungen aus dem ZF-Signal am ersten Eingang 10 der zweiten Demodulationsstufe 11 und der Trägerschwingung vom Oszillator 12 am zweiten Eingang 15 der zweiten Demodulationsstufe 11 um eine Phasenverschiebung von 90° gegenüber dem Phasenwinkel der entsprechenden Trägerschwingungen an den Eingängen 7 bzw. 14 der ersten Demodulationsstufe 8 unterschiedlich. Dementsprechend wird am Ausgang 16 der ersten Demodulationsstufe 8 aus einer in dieser Stufe vorgenommenen multiplikativen Verknüpfung der Signale an ihren Eingängen 7 bzw. 14 ein erstes Ausgangssignal mit einer Gleichkomponente erhalten, die dem Sinus des Phasenwinkels zwischen den Trägerschwingungen an den Eingängen 10 bzw. 15 der zweiten Demodulationsstufe 11 proportional ist, und am Ausgang 17 der zweiten Demodulationsstufe 11 wird ein zweites Ausgangssignal erhalten, dessen Gleichanteil dem Kosinus dieses Phasenwinkels proportional ist.

In einer Abwandlung des vorliegenden Ausführungsbeispieles kann die Phasenschieberstufe 6 auch in eine der Verbindungen zwischen dem Ausgang 13 des Oszillators 12 und den zweiten Eingängen 14 bzw. 15 der Demodulationsstufen 8 bzw. 11 eingefügt sein. Auch damit kann eine um 90° unterschiedliche Phasendifferenz zwischen den Trägerschwingungen an den Eingängen 7 und 14 der ersten Demodulationsstufe 8 einerseits bzw. den Eingängen 10 und 15 der zweiten Demodulationsstufe 11 andererseits erzeugt werden.

Vom Ausgang 16 der ersten Demodulationsstufe wird das erste Ausgangssignal einem Eingang 18 einer ersten Filterstufe 19 zugeführt und darin wenigstens weitgehend von Oberschwingungsanteilen befreit. Eine weitere, wesentliche Funktion kommt der ersten Filterstufe 19 im nicht eingeschwungenen bzw. eingerasteten Zustand der phasenverriegelten Schleife zu, in dem das erste Ausgangssignal in der ersten Filterstufe 19 eine Phasenverschiebung erfährt, durch die verhindert werden kann, daß sich die von den Demodulationsstufen 8 bzw. 11 gelieferten Signale während des Einregelns der phasenverriegelten Schleife in einem nicht erwünschten Zustand derart auslöschen, daß der Vorgang des Einregelns, d.h. des Steuerns des steuerbaren Oszillators 12 auf seine korrekte Frequenz und Phase der Trägerschwingung, gestört wird. Bei idealer Filterung in der als Tiefpaßfilter ausgebildeten ersten Filterstufe 19 wird an deren Ausgang 20 ein drittes Ausgangssignal erhalten, welches im eingerasteten Zustand der phasenverriegelten Schleife der Gleichkomponente des ersten Ausgangssignals entspricht und somit dem Sinus des Phasenwinkels zwischen den Trägerschwingungen an den Eingängen 10 und 15 der zweiten Demodulationsstufe 11 proportional ist.

Das zweite Ausgangssignal vom Ausgang 17 der zweiten Demodulationsstufe 11 wird einem ersten Eingang 21 einer Multiplizierstufe 22 zugeführt, wohingegen das dritte Ausgangssignal vom Ausgang 20 der ersten Filterstufe 19 einem zweiten Eingang 23 der Multiplizierstufe 22 zugeleitet wird. Das zweite und das dritte Ausgangssignal werden in der Multiplizierstufe 22 multiplikativ verknüpft, so daß am Ausgang 24 der Multiplizierstufe 22 ein viertes Ausgangssignal abgegeben wird, dessen Gleichanteil proportional zum Produkt aus dem Sinus und dem Kosinus des Phasenwinkels zwischen den Trägerschwingungen an den Eingängen 10 bzw. 15 der zweiten Demodulationsstufe 11 ist. Dadurch, daß in der ersten Filterstufe 19 alle Oberwellenanteile aus dem ersten Ausgangssignal wenigstens weitgehend unterdrückt werden, entstehen durch die multiplikative Verknüpfung in der Multiplizierstufe 22 keine zusätzlichen Gleichanteile als Mischprodukte im vierten Ausgangssignal, die anderenfalls die Abhängigkeit dieses vierten Ausgangssignals vom Phasenwinkel der Trägerschwingungen an den Eingängen 10 bzw. 15 verfälschen könnten.

In der nachfolgenden Anordnung aus zwei Koeffizientengliedern 25, 26 und einer Überlagerungsstufe 27 wird ein siebtes Ausgangssignal als Linearkombination des zweiten und des vierten Ausgangssignals gewonnen und an einem Ausgang 28 der Überlagerungsstufe 27 abgegeben. Dazu wird das zweite Ausgangssignal im ersten Koeffizientenglied 25 mit einem ersten Koeffizienten k1 multipliziert und auf diese Weise ein fünftes Ausgangssignal gewonnen. Entsprechend wird im zweiten Koeffizientenglied 26 durch Multiplikation mit einem zweiten Koeffizienten k2 aus dem vierten Ausgangssignal ein sechstes Ausgangssignal erzeugt. In der Überlagerungsstufe 27, deren erster Eingang 29 mit dem ersten Koeffizientenglied 25 und deren zweiter Eingang 30 mit dem zweiten Koeffizientenglied 26 verbunden ist, werden das fünfte und das sechste Ausgangssignal additiv überlagert, woraus das siebte Ausgangssignal gebildet wird.

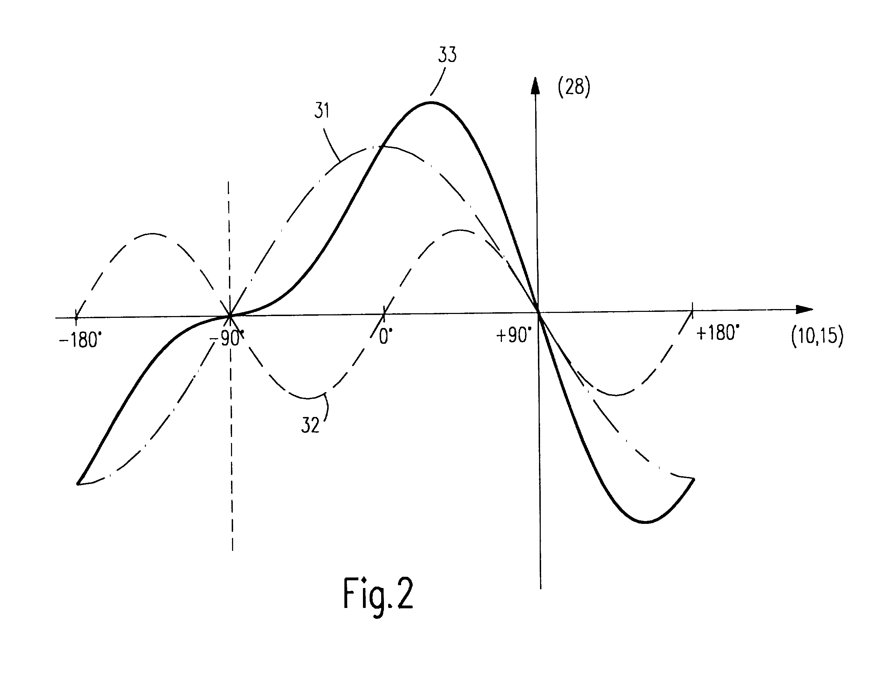

In Fig. 2 ist der durch die vorstehend beschriebenen Verknüpfungen der Ausgangssignale entstehende Zusammenhang zwischen dem siebten Ausgangssignal und dem Phasenwinkel zwischen den Trägerschwingungen an den Eingängen 10 bzw. 15 der zweiten Demodulationsstufe 11 als Kennlinie der Schaltung, bestehend aus der Phasenschieberstufe 6, den Demodulationsstufen 8 bzw. 11, dem Oszillator 12, der ersten Filterstufe 19, der Multiplizierstufe 22, den Koeffizientengliedern 25, 26 und der Überlagerungsstufe 27, dargestellt. Dabei ist waagerecht der genannte Phasenwinkel und senkrecht das siebte Ausgangssignal als dessen Funktion aufgetragen. Die strichpunktiert gezeichnete Kurve entspricht dem zweiten Ausgangssignal und damit einer kosinusförmigen Abhängigkeit vom genannten Phasenwinkel; diese Kurve ist mit dem Bezugszeichen 31 gekennzeichnet. Mit einer gestrichelten Linie ist das vierte Ausgangssignal als Funktion des beschriebenen Phasenwinkels in Fig. 2 aufgetragen und mit dem Bezugszeichen 32 versehen. Die Vollinie 33 bezeichnet das siebte Ausgangssignal als in der beschriebenen Weise gebildete Linearkombination aus den Kurven 31 und 32. Der Arbeitspunkt der im vorstehenden zu Fig. 1 beschriebenen Schaltung liegt bei einem Phasenwinkel von +90°.

Die Kurve 33 als Kennlinie F der beschriebenen Schaltungsanordnung nach Fig. 1 als Funktion des genannten Phasenwinkels phi gehorcht somit der Gleichung

$$F(phi) = k1 \cdot cos(phi) + k2 \cdot sin(phi) \cdot cos(phi).$$

Sollen die Koeffizienten k1, k2 in normierter Darstellung wiedergegeben werden, gilt dabei

$$k1 + k2 = 1.$$

Bei der beschriebenen Übermodulation mit invertierter Phase ergibt sich im Diagramm nach Fig. 2 ein Arbeitpunkt bei -90°. An dieser Stelle weist die Kurve 33 als Kennlinie der beschriebenen Schaltungsanordnung gemäß Fig. 1 eine Abflachung bzw. einen Sattelpunkt auf, dessen genauer Verlauf von der Wahl der Koeffizienten k1, k2 abhängt. Für die Erfindung wird der Wert des ersten Koeffizienten k1 größer festgesetzt als der Wert des zweiten Koeffizienten k2. Dann weist die Kurve 33 beim Phasenwinkel von -90° stets eine positive Steigerung auf, so daß hier kein stabiler Kennlinienbereich mit negativer Steigung wie beim Arbeitspunkt bei dem Phasenwinkel von +90° gebildet wird. In einem bevorzugten Ausführungsbeispiel wird der Wert des ersten Koeffizienten k1 auf 0,55 und der Wert des zweiten Koeffizienten k2 auf 0,45 festgesetzt.

Vom Ausgang 28 der Überlagerungsstufe 27 gelangt das siebte Ausgangssignal über eine Verstärkerstufe 34, in der bevorzugt auch eine Spannungs-Strom-Konversion vorgenommen werden kann, sowie über eine im vorliegenden Beispiels als Abtast- und Halteschaltung ausgebildete Tastschaltung 35 an eine zweite Filterstufe 36, die als Schleifenfilter dient und von der aus das siebte Ausgangssignal als Steuersignal einem Steuereingang 37 des Oszillators 12 zum Steuern der Frequenz bzw. Phase der von diesem abgegebenen Trägerschwingung zugeführt wird. Damit bilden die Demodulationsstufen 8, 11, der Oszillator 12, die Phasenschieberstufe 6, die erste Filterstufe 19, die Multiplizierstufe 22, die Koeffizientenglieder 25, 26, die Überlagerungsstufe 27, die Verstärkerstufe 34, die Abtast- und Halteschaltung 35 sowie die zweite Filterstufe 36 eine phasenverriegelte Schleife, auch als FPLL bezeichnet. Der für diese FPLL wirksame Frequenz- bzw. Phasendetektor weist die Kennlinie gemäß Kurve 33 nach Fig. 2 auf. Der Verstärkungsfaktor der Verstärkerstufe 34 und die Werte der Koeffizienten k1, k2 gehen gemeinsam in die Schleifenverstärkung dieser FPLL ein und können entsprechend gegenseitig gewählt werden. Durch die Abtast- und Halteschaltung 35 und die mit ihr erzielte Unterbrechung des Signalweges wird verhindert, daß während der Synchronimpulse auftretende Übermodulationen, die zu einer invertierten Phasenlage der mit dem Videosignal modulierten Trägerschwingung führt, ein fehlerhaftes Steuersignal hervorruft, durch das die FPLL.aus dem eingerasteten Zustand geraten kann. Mit dieser FPLL wird durch den Oszillator 12 eine Trägerschwingung zum Demodulieren des ZF-Signals am Anschluß 1, d.h. zum Gewinnen eines demodulierten Videosignals aus diesem ZF-Signal erzeugt.

Eine dritte Demodulationsstufe 38 erhält an einem ersten Eingang 39 die Trägerschwingung vom Oszillator 12 und an einem zweiten Eingang 40 das ZF-Signal vom Anschluß 1 zugeführt. An einem Ausgang 41 gibt die dritte Demodulationsstufe 38 ein demoduliertes Videosignal ab. Dieses kann einerseits zur Weiterverarbeitung, beispielsweise Wiedergabe oder Aufzeichnung, als auch zur Gewinnung bzw. Abtrennung der darin enthaltenen Synchronimpulse herangezogen werden. Für letzteres wird das demodulierte Videosignal vom Ausgang 41 einer Synchronimpuls-Abtrennstufe 42 an ihrem Eingang 43 zugeleitet. Die Synchronimpuls-Abtrennstufe kann bevorzugt eine Schwarzwertdetektionsstufe umfassen, wie sie beispielsweise aus der DE-OS 40 40 298 bekannt ist. Damit wird aus dem demodulierten Videosignal ein Schwarzwert abgeleitet, der als Schneidepegel zum Abtrennen der Synchronimpulse aus dem demodulierten Videosignal dient, beispielsweise mit einer Komparationseinrichtung. Die abgetrennten Synchronimpulse werden zum Steuern der Unterbrechung des Signalweges des siebten Ausgangssignals von einem Ausgang 44 der Synchronimpuls-Abtrennstufe 42 an einen Steuersignaleingang 45 der Abtast- und Halteschaltung 35 als Steuersignal zugeführt. Durch sie wird der Signalweg des siebten Ausgangssignals während der Dauer der Synchronimpulse unterbrochen.

Die Synchronimpuls-Abtrennstufe 42 weist weiterhin einen Umschalteingang 46 auf, über den die Synchronimpuls-Abtrennung umschaltbar ist in der Weise, daß in einem Betriebszustand sämtliche Synchronimpulse als Steuersignale am Ausgang 44 erscheinen, und daß in einem zweiten Betriebsfall eine Integration der aus dem demodulierten Videosignal abgetrennten Impulse derart durchgeführt wird, daß am Ausgang 44 nur während des Auftretens der Vertikal-synchronimpulse ein Steuersignal zur Unterbrechung des Signalweges des siebten Ausgangssignals auftritt. Dadurch werden bei stark gestörten Videosignalen Fehler durch Störimpulse vermieden, die anderenfalls als Synchronimpulse interpretiert werden könnten. Grundsätzlich sind Schaltungsanordnungen bekannt, mit denen erkannt werden kann, ob das vorliegende, demodulierte Videosignal (oder auch das ZF-Signal) entsprechend starke Störungen aufweist oder nicht. Damit kann die Umschaltung über den Umschalteingang 46 auch automatisch vorgenommen werden.

In Fig. 1 ist die zweite Filterstufe 36 in einfacher Weise als Tiefpaßfilter mit einer Reihenschaltung aus einem Widerstand 47 und einem Kondensator 48 gebildet, die einen Querzweig zwischen der Leitungsverbindung von der Abtast- und Halteschaltung 35 zum Steuereingang 37 des Oszillators 12 und Masse bildet. Der Kondensator 48 speichert in den Zeitintervallen der Unterbrechung des Signalweges des siebten Ausgangssignals den letzten Wert dieses Steuersignals für den Oszillator 12.

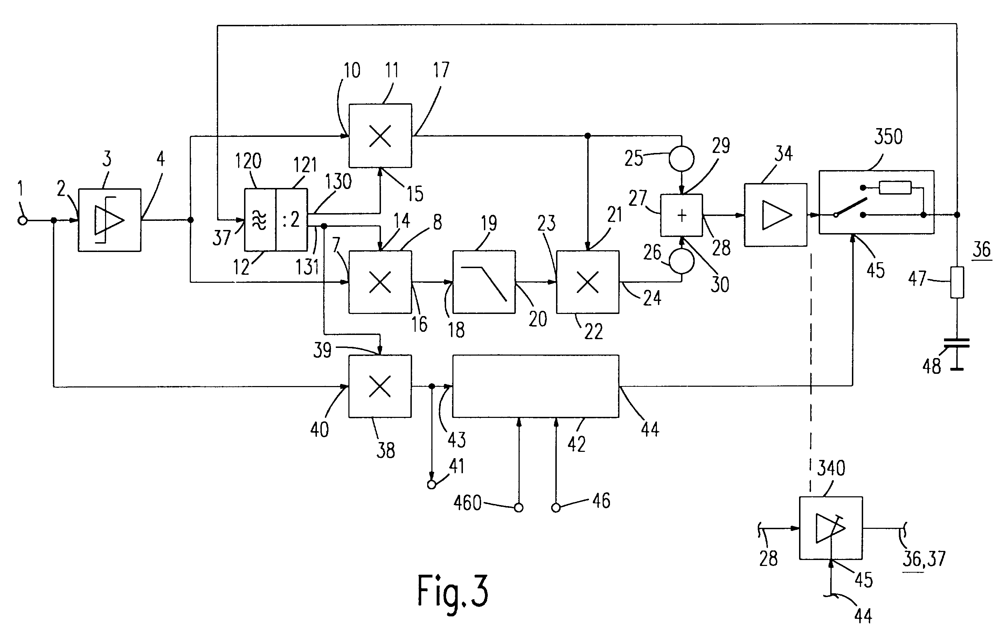

Fig. 3 zeigt eine Abwandlung der Schaltungsanordnung nach Fig. 1, in der übereinstimmende Elemente wieder mit denselben Bezugszeichen versehen sind. Da auch die Funktion dieser gleich bezeichneten Elemente mit derjenigen nach Fig. 1 übereinstimmt, wird insofern auf die Beschreibung zu Fig. 1 Bezug genommen.

Das Ausführungsbeispiel nach Fig. 3 unterscheidet sich von demjenigen nach Fig. 1 zum einen durch die geänderte Ausführung des steuerbaren Oszillators 12. Dieser umfaßt eine Schwingungserzeugungsstufe 120, die eine Schwingung mit der doppelten Frequenz der Trägerschwingung abgibt. Diese Schwingung wird in einer der Schwingungserzeugungsstufe 120 nachgeschalteten Teilerstufe 121 in ihrer Frequenz auf die Hälfte, d.h. auf die Frequenz der Trägerschwingung, herunter geteilt. Von der Teilerstufe 121 wird an einem ersten Ausgang 130 des Oszillators 12 eine erste Trägerschwingung und an einem zweiten Ausgang 131 des Oszillators 12 eine zweite Trägerschwingung abgegeben, die gegenüber der ersten Trägerschwingung um 90° phasenverschoben ist. Die erste Trägerschwingung vom ersten Ausgang 130 wird dem zweiten Eingang 15 der zweiten Demodulationsstufe 11 zugeführt, wohingegen die zweite Trägerschwingung vom zweiten Ausgang 131 des Oszillators 12 sowohl dem zweiten Eingang 14 der ersten Demodulationsstufe 8 als auch dem ersten Eingang 39 der dritten Demodulationsstufe 38 zugeführt wird. Dadurch kann die Phasenschieberstufe 6 zwischen dem Ausgang 4 der Begrenzerstufe 3 und dem ersten Eingang 10 der zweiten Demodulationsstufe 11 aus Fig. 1 eingespart werden; die Phasenlagen der einzelnen Signale bleiben jedoch gegenüber dem Ausführungsbeispiel nach Fig. 1 unverändert.

Fig. 3 zeigt weiterhin ein abgewandeltes Beispiel für eine Tastschaltung, die hier mit dem Bezugszeichen 350 versehen ist. Die Tastschaltung 350 ist in mit Fig. 1 übereinstimmender Weise in den Signalweg für das siebte Ausgangssignal zwischen die Verstärkerstufe 34 und die zweite Filterstufe 36 eingefügt und mit ihrem Steuersignaleingang 45 wieder mit dem Ausgang 44 der Synchronimpuls-Abtrennstufe 42 verbunden. Die Tastschaltung 350 ist derart ausgebildet, daß beim Auftreten von Synchronimpulsen im Videosignal der Signalweg des siebten Ausgangssignals von der unmittelbaren Verbindung auf eine das siebte Ausgangssignal nur gedämpft durchlassende Verbindung umgeschaltet wird, die in Fig. 3 durch einen ohmschen Widerstand innerhalb der Tastschaltung 350 angedeutet ist. Vorzugsweise kann die Übertragung des siebten Ausgangssignals als Steuersignal für den Oszillator 12 während der Synchronimpulse auf etwa 25 bis 30 % des Wertes des Übertragungsfaktors in den Zeitintervallen zwischen den Synchronimpulsen gedämpft werden. Dadurch wird eine abgeschwächte Nachsteuerung des Oszillators 12 während der Synchronimpulse erhalten.

Fig. 3 zeigt außerdem als Einzelheit eine Abwandlung der Kombination zwischen der Verstärkerstufe 34 und der Tastschaltung 350, die als Verstärkerstufe 340 mit umschaltbarer bzw. umsteuerbarer Verstärkung ausgebildet ist. Diese Verstärkerstufe 340 kann in der angedeuteten Weise zwischen dem Ausgang 28 der Überlagerungsstufe 27, der zweiten Filterstufe 36 bzw. dem Steuereingang 37 des Oszillators 12 und dem Ausgang 44 der Synchronimpuls-Abtrennstufe 42 eingefügt werden und ersetzt dabei die Verstärkerstufe 34 und die Tastschaltung 350 in Fig. 3. Durch Umsteuern des Verstärkungsfaktors der Verstärkerstufe 340 wird in zu den beschriebenen Ausführungsbeispielen äquivalenter Weise eine Umsteuerung des Übertragungsfaktors des Signalweges für das siebte Ausgangssignal erhalten.

In einer weiteren Abwandlung der Fig. 1, die ebenso wie die vorstehend zu Fig. 3 besprochenen Abwandlungen der Fig. 1 unabhängig von diesen eingesetzt werden kann, zeigt die Synchronimpuls-Abtrennstufe 42 nach Fig. 3 einen zweiten Umschalteingang 460, über den der Synchronimpuls-Abtrennstufe 42 ein Signal zuführbar ist, durch das das Umsteuern des Signalweges des siebten Ausgangssignals in der Tastschaltung 350 (bzw. der Verstärkerstufe 340) abhängig von der Übertragungsnorm des Videosignals vorgenommen werden kann. Damit kann insbesondere das Umsteuern bei einer negativen Modulation des Videosignals auf die Trägerschwingung entfallen, jedoch auch beispielsweise bei der sogenannen NICAM-Stereotonübertragung oder weiteren Übertragungsnormen des Videosignals.

Durch die erfindungsgemäße Schaltungsanordnung wird eine korrekte Demodulation auch der Vertikalsynchronimpulse auch bei starker Übermodulation ermöglicht. Amplitude und Impulsform bleiben dabei weitgehend erhalten. Die Erfindung ermöglicht dies bei geringem schaltungstechnischem Aufwand.

**Patentansprüche**

1.    Schaltungsanordnung zum Demodulieren eines auf eine zwischenfrequente Trägerschwingung frequenzmodulierten Videosignals (ZF-Signal) mit

-    einer als Frequenz- bzw. Phasendemodulator ausgebildeten ersten Demodulationsstufe (8) zum multiplikativen Verknüpfen des ZF-Signals mit einer Trägerschwingung von einem steuerbaren Oszillator (12) und zur Abgabe eines aus dieser Verknüpfung gebildeten ersten Ausgangssignals (an 16),

-    einer als Frequenz- bzw. Phasendemodulator ausgebildeten zweiten Demodulationsstufe (11) zum multiplikativen Verknüpfen des ZF-Signals mit der Trägerschwingung (an 13) um eine Viertelperiode der zwischenfrequenten Trägerschwingung phasenverschoben und zur Abgabe eines aus dieser Verknüpfung gebildeten zweiten Ausgangssignals (an 17),

-    einer ersten Filterstufe (19) zum Tiefpaßfiltern des ersten Ausgangssignals (von 16) und zum Abgeben eines dritten Ausgangssignals (an 20),

-    einer Multiplikationsstufe (22) zum multiplikativen Verknüpfen des zweiten (von 17) und des dritten Ausgangssignals (von 20) zu einem vierten Ausgangssignal,

-    einer Überlagerungsstufe (27) zum Bilden eines siebten Ausgangssignals (an 28) durch additives Verknüpfen von aus dem zweiten (von 17) und dem vierten Ausgangssignal (von 22) abgeleiteten fünften (an 29) bzw. sechsten (an 30) Ausgangssignalen und

- einer zweiten Filterstufe (36) zum Gewinnen eines Steuersignals aus dem siebten Ausgangssignal (von 28) zum Steuern der Frequenz und/oder Phase des steuerbaren Oszillators (12),

gekennzeichnet durch

- ein erstes Koeffizientenglied (25) zum Ableiten des fünften Ausgangssignals aus dem zweiten Ausgangssignal und
- ein zweites Koeffizientenglied (26) zum Ableiten des sechsten Ausgangssignals aus dem vierten Ausgangssignal,
- wobei in jedem Koeffizientenglied (25, 26) zum Bilden des von ihm abgeleiteten Signals das ihm zugeführte Signal mit einem vorgebbaren Koeffizienten (k1, k2) multipliziert wird, der Koeffizient (k1) des ersten Koeffizientengliedes (25) größer als der (k2) des zweiten Koeffizientengliedes (26) gewählt ist.

2. Schaltungsanordnung nach Anspruch 1, gekennzeichnet durch eine Tastschaltung (35), die in den Signalweg des siebten Ausgangssignals (von 28) zwischen der Überlagerungsstufe (27) und der zweiten Filterstufe (36) eingefügt ist zum Umsteuern dieses Signalweges derart, daß er während des Auftretens von Synchronimpulsen im Videosignal einen niedrigeren Übertragungsfaktor annimmt als in den Zeitintervallen außerhalb der Synchronimpulse.

3. Schaltungsanordnung nach Anspruch 2, dadurch gekennzeichnet, daß die Tastschaltung (35) als Abtast- und Halteschaltung ausgebildet ist, von der das Umsteuern als Unterbrechung des Signalweges des siebten Ausgangssignals während des Auftretens von Synchronimpulsen im Videosignal und zum Konstanthalten des Wertes des Steuersignals während dieser Synchronimpulse ausführbar ist.

4. Schaltungsanordnung nach Anspruch 1, 2 oder 3, gekennzeichnet durch eine Phasenschieberstufe (6), über die das ZF-Signal der zweiten Demodulationsstufe (11) zuleitbar ist und durch die es bezüglich der Frequenz der Trägerschwingung um 90° phasenverschoben wird.

5. Schaltungsanordnung nach Anspruch 1, 2 oder 3, gekennzeichnet durch eine Phasenschieberstufe (6), über die die Trägerschwingung vom Oszillator (12) zu einer der Demodulationsstufen (8, 11) zuleitbar ist und durch die die Trägerschwingung vom Oszillator (12) um 90° phasenverschoben wird.

6. Schaltungsanordnung nach Anspruch 1, 2 oder 3, dadurch gekennzeichnet, daß der steuerbare Oszillator (12) einen ersten (130) und einen zweiten (131) Ausgang aufweist zum Abgeben einer ersten Trägerschwingung bzw einer ihr gegenüber um 90° phasenverschobenen zweiten Trägerschwingung.

7. Schaltungsanordnung nach einem der vorhergehenden Ansprüche, gekennzeichnet durch eine Begrenzerstufe (3) zum Begrenzen der Amplitude des ZF-Signals, welches der ersten und der zweiten Demodulationsstufe (8, 11) zugeleitet wird.

8. Schaltungsanordnung nach Anspruch 2 oder 3 oder nach einem der Ansprüche 4 bis 7 in Verbindung mit Anspruch 2 oder 3, gekennzeichnet durch eine dritte Demodulationsstufe (38), der an einem ersten Eingang (40) das ZF-Signal und an einem zweiten Eingang (39) die Trägerschwingung bzw. eine der Trägerschwingungen vom Oszillator (12) zuführbar ist und von der an einem Ausgang (41) ein demoduliertes Videosignal abgebbar ist, sowie eine Synchronimpuls-Abtrennstufe (42) zum Gewinnen von Synchronimpulsen aus dem demodulierten Videosignal, die der Tastschaltung (35) zum Umsteuern des Übertragungsfaktors des Signalweges des siebten Ausgangssignals zuführbar sind.

9. Schaltungsanordnung nach Anspruch 8, dadurch gekennzeichnet, daß die Synchronimpuls-Abtrennstufe (42) eine Schwarzwertdetektionsstufe umfaßt, durch die ein einem schwarzen Bildinhalt entsprechender Signalpegel im demodulierten Videosignal ermittelbar ist, der als Bezugspegel zum Abtrennen der Synchron impulse heranziehbar ist.

10. Schaltungsanordnung nach Anspruch 8 oder 9, dadurch gekennzeichnet, daß das Umsteuern des Übertragungsfaktors des Signalweges des siebten Ausgangssignals in der Tastschaltung (35) wahlweise mit allen Synchronimpulsen oder nur mit Vertikal-Synchronimpulsen aus dem demodulierten Videosignal steuerbar ist.

11. Schaltungsanordnung nach Anspruch 8, 9 oder 10, dadurch gekennzeichnet, daß das Umsteuern des Signalweges des siebten Ausgangssignals auf einen niedrigen Übertragungsfaktor abhängig von der Übertragungsnorm des Videosignals vorgenommen wird.

**Claims**

1. A circuit arrangement for demodulating a video signal (IF signal) which is frequency-modulated on an intermediate-frequency carrier oscillation, comprising

- a first demodulation stage (8) formed as a frequency or phase demodulator for multiplicatively combining the IF signal with a carrier oscillation of a controllable oscillator (12) and for supplying a first output signal (at 16) formed from this combination,
- a second demodulation stage (11) formed as a frequency or phase demodulator for multiplicatively combining the IF signal with the carrier oscillation (at 13) phase-shifted by a quarter period of the intermediate-frequency carrier oscillation, and for supplying a second output signal (at 17) formed from this combination,
- a first filter stage (19) for low-pass filtering the first output signal (from 16) and for supplying a third output signal (at 20),
- a multiplier stage (22) for multiplicatively combining the second output signal (from 17) and the third output signal (from 20) to a fourth output signal,
- a superposition stage (27) for forming a seventh output signal (at 28) by additively combining a fifth output signal (at 29) and a sixth output signal (at 30) derived from the second output signal (from 17) and the fourth output signal (from 22), and
- a second filter stage (36) for gaining a control signal from the seventh output signal (from 28) for controlling the frequency and/or phase of the controllable oscillator (12),

characterized by

- a first coefficient member (25) for deriving the fifth output signal from the second output signal, and
- a second coefficient member (26) for deriving the sixth output signal from the fourth output signal,
- the signal applied to each coefficient member (25, 26) being multiplied by a predeterminable coefficient (k1, k2) for forming the signal derived therefrom, and the coefficient (k1) of the first coefficient member (25) being chosen to be larger than the coefficient (k2) of the second coefficient member (26).

2. A circuit arrangement as claimed in claim 1, characterized by a sampling circuit (35) which is inserted in the signal path of the seventh output signal (from 28) between the superposition stage (27) and the second filter stage (36) for reversing this signal path in such a way that it assumes a lower transmission factor during the occurrence of sync pulses in the video signal than in the time intervals outside the sync pulses.

3. A circuit arrangement as claimed in claim 2, characterized in that the sampling circuit (35) is constituted as a sample-and-hold circuit which can perform the reversal so as to interrupt the signal path of the seventh output signal during the occurrence of sync pulses in the video signal and for maintaining the value of the control signal constant during these sync pulses.

4. A circuit arrangement as claimed in claim 1, 2 or 3, characterized by a phase-shifting stage (6) via which the IF signal of the second demodulation stage (11) can be applied and by which it is shifted 90° in phase with respect to the carrier oscillation frequency.

5. A circuit arrangement as claimed in claim 1, 2 or 3, characterized by a phase-shifting stage (6) via which the carrier oscillation of the oscillator (12) can be applied to one of the demodulation stages (8, 11) and by which the carrier oscillation of the oscillator (12) is shifted 90° in phase.

6. A circuit arrangement as claimed in claim 1, 2 or 3, characterized in that the controllable oscillator (12) has a first output (130) and a second output (131) for supplying a first carrier oscillation and a second carrier oscillation which is shifted 90° in phase with respect to the first carrier oscillation.

7. A circuit arrangement as claimed in any one of the preceding claims, characterized by a limiter stage (3) for limiting the amplitude of the IF signal which is applied to the first and the second demodulation stage (8, 11).

8. A circuit arrangement as claimed in claim 2 or 3 or as claimed in any one of claims 4 to 7 where appendant to claim 2 or 3, characterized by a third demodulation stage (38), a first input (40) of which can receive the IF signal and a second input (39) can receive the carrier oscillation or one of the carrier oscillations of the oscillator (12), and an output (41) of which can supply a demodulated video signal, as well as a sync pulse-separating stage (42) for gaining sync pulses from the demodulated video signal which can be applied to the sampling circuit (35) for reversing the transmission factor of the signal path of the seventh output signal.

9. A circuit arrangement as claimed in claim 8, characterized in that the sync pulse-separating stage (42) comprises a black level detection stage by which a signal level corresponding to a black picture content can be detected in the demodulated video signal, which signal level can be used as a reference level for separating the sync pulses.

10. A circuit arrangement as claimed in claim 8 or 9, <u>characterized in that</u> the reversal of the transmission factor of the signal path of the seventh output signal in the sampling circuit (35) can be optionally controlled by means of all sync pulses or only by means of vertical sync pulses from the demodulated video signal.

11. A circuit arrangement as claimed in claim 8, 9 or 10, <u>characterized in that</u> the signal path of the seventh output signal is reversed to a low transmission factor in dependence upon the transmission standard of the video signal.

## Revendications

1. Montage de circuit pour la démodulation d'un signal vidéo à modulation de fréquence sur une porteuse de fréquence intermédiaire (signal FI) avec:

   - un premier étage de démodulation (8) conçu comme un démodulateur de fréquence ou de phase en vue de la liaison par multiplication du signal FI avec une porteuse d'un oscillateur (12) à commander et en vue de la délivrance d'un premier signal de sortie formé à partir de cette liaison (en 16),
   - un deuxième étage de démodulation (11) conçu comme un démodulateur de fréquence ou de phase en vue de la liaison par multiplication du signal FI (en 13) avec la porteuse déphasée d'un quart de période de la porteuse de fréquence intermédiaire et en vue de la délivrance d'un deuxième signal de sortie formé à partir de cette liaison (en 17),
   - un premier étage de filtrage (19) en vue du filtrage passe-bas du premier signal de sortie (en 16) et en vue de la délivrance d'un troisième signal de sortie (en 20),
   - un étage de multiplication (22) en vue de la liaison par multiplication des deuxième (de 17) et troisième signaux de sortie (de 20) pour un quatrième signal de sortie,
   - un étage de superposition (27) en vue de la formation d'un septième signal de sortie (en 28) par liaison par addition des cinquième (en 29) ou sixième (en 30) signaux de sortie dérivés des deuxième (de 17) et quatrième (de 22) signaux de sortie et
   - un deuxième étage de filtrage (36) en vue de la production d'un signal de commande à partir du septième signal de sortie (de 28) en vue de la commande de la fréquence et/ou de la phase de l'oscillateur (12) à commander

   <u>caractérisé par</u>

   - un premier élément de coefficient (25) en vue de dériver le cinquième signal de sortie du deuxième signal de sortie et
   - un deuxième élément de coefficient (26) en vue de dériver le sixième signal de sortie du quatrième signal de sortie,
   - dans chaque élément de coefficient (25, 26) en vue de la formation du signal dérivé de celui-ci, le signal qui lui est amené est multiplié par un coefficient (k1, k2) à déterminer préalablement, le coefficient (k1) du premier élément de coefficient (25) étant supérieur au coefficient (k2) du deuxième élément de coefficient (26).

2. Montage de circuit selon la revendication 1, <u>caractérisé par</u> un circuit de modulation (35) qui est inséré dans le trajet de signal du septième signal de sortie (de 28) entre l'étage de superposition (27) et le deuxième étage de filtrage (36) et en vue de la commutation de ce trajet de signal de telle sorte qu'il adopte pendant l'apparition d'impulsions synchrones dans le signal vidéo un facteur de transmission inférieur aux intervalles temporels en dehors des impulsions synchrones.

3. Montage de circuit selon la revendication 2, <u>caractérisé en ce</u> que le circuit de modulation (35) est conçu comme un circuit de balayage et de blocage à partir duquel l'inversion comme interruption du trajet de signal du septième signal de sortie pendant l'apparition d'impulsions synchrones dans le signal vidéo et en vue de maintenir constante la valeur du signal de commande pendant ces impulsions de synchronisation est effectuée.

4. Circuit selon l'une des revendications 1, 2 ou 3, <u>caractérisé par</u> un étage de déphasage (6) par l'intermédiaire duquel le signal FI du deuxième étage de démodulation (11) peut être amené et par lequel il est déphasé par rapport à la fréquence de la porteuse de 90°.

5. Montage de circuit selon l'une des revendications 1, 2 ou 3, <u>caractérisé par</u> un étage de déphasage (6) par l'intermédiaire duquel la porteuse peut être amenée de l'oscillateur (12) à l'un des étages de démodulation (8, 11) et par lequel la porteuse est déphasée de 90° par l'oscillateur (12).

6. Montage de circuit selon l'une des revendications 1, 2 ou 3, <u>caractérisé en ce</u> que l'oscillateur (12) à commander présente des première (130) et deuxième (131) sorties en vue de la délivrance d'une première porteuse ou d'une deuxième porteuse déphasée de 90° par rapport à celle-ci.

**7.** Circuit selon l'une des revendications précédentes, <u>caractérisé par</u> un étage limiteur (3) en vue de limiter l'amplitude du signal FI qui est amené aux premier et deuxième étages de démodulation (8, 11).

**8.** Montage de circuit selon l'une des revendications 2 ou 3 ou selon l'une des revendications 4 à 7 connexes à la revendication 2 ou 3, <u>caractérisé par</u> un troisième étage de démodulation (38) auquel peut être amené le signal FI à une première entrée (40) et la porteuse ou l'une des porteuses de l'oscillateur (12) à une deuxième entrée (39) et à partir duquel un signal vidéo démodulé peut être délivré à une sortie (41) ainsi qu'un étage de séparation des impulsions synchrones (42) en vue de la production d'impulsions synchrones à partir du signal vidéo démodulé qui peuvent être amenées du circuit de modulation (35) en vue de l'inversion du facteur de transmission du trajet de signal du septième signal de sortie.

**9.** Montage de circuit selon la revendication 8, <u>caractérisé en ce</u> que l'étage séparateur des impulsions synchrones (42) comprend un étage de détection des valeurs noires par lequel un niveau de signal correspondant au contenu d'une image noire peut être déterminé dans un signal vidéo démodulé qui peut être utilisé comme niveau de référence en vue de la séparation des impulsions synchrones.

**10.** Montage de circuit selon l'une des revendications 8 ou 9, <u>caractérisé en</u> ce que l'inversion du facteur de transmission du trajet de signal du septième signal de sortie dans le circuit de modulation (35) peut être commandée au choix avec toutes les impulsions synchrones ou seulement avec les impulsions synchrones verticales à partir du signal vidéo démodulé.

**11.** Montage de circuit selon l'une des revendications 8, 9 ou 10, <u>caractérisé en</u> ce que l'inversion du trajet de signal du septième signal de sortie est effectuée à un facteur de transmission minime en fonction de la norme de transmission du signal vidéo.

Fig.1

EP 0 674 436 B1

13

Fig.2

Fig.3